**Europäisches Patentamt**

**European Patent Office**

**Office européen des brevets**

(19)

(11) Veröffentlichungsnummer **0 001 565**
**B1**

(12) **EUROPÄISCHE PATENTSCHRIFT**

(45) Veröffentlichungstag der Patentschrift:
02.09.81

(21) Anmeldenummer: 78100971.7

(22) Anmeldetag. 22.09.78

(51) Int Cl.³ **G 05 B 15/02,** B 23 D 36/00,
B 26 D 5/40, G 05 D 5/00,
H 02 P 5/00

(54) Schaltungsanordnung für den elektrischen Direktantrieb einer rotierenden Trennvorrichtung.

(30) Priorität: 19.10.77 DE 2747022

(43) Veröffentlichungstag der Anmeldung
02.05.79 Patentblatt 79/9

(45) Bekanntmachung des Hinweises auf die Patenterteilung
02.09.81 Patentblatt 81/35

(84) Benannte Vertragsstaaten:
BE CH FR SE

(56) Entgegenhaltungen
DD-A-100 594
DE-A-1 502 849
DE-B-1 135 997
DE-B-1 302 871
US-A-3 581 613
ARCHIV FÜR ELEKTROTECHNIK
Jahrgang 58, Mai 1976, Berlin
W. LEONHARD »Zeitoptimale Scherenregelung«, Seiten 61 bis 67
SIEMENS-ZEITSCHRIFT, Jahrgang 43, Heft
8, August 1969, Berlin
K. KOOPMANN »Rotierende Sägen in Rohrwalzwerken«, Seiten 690 bis 694

(73) Patentinhaber. SIEMENS AKTIENGESELLSCHAFT Berlin
und München, Postfach 22 02 61, D-8000 München 22 (DE)

(72) Erfinder: Matthiesen, Horst, Zenkerstrasse 22,
D-8520 Erlangen (DE)
Erfinder: Rubruck, Manfred, An den Eichen 90,
D-8521 Igelsdorf (DE)

## Schaltungsanordnung für den elektrischen Direktantrieb einer rotierenden Trennvorrichtung

Die Erfindung bezieht sich auf eine Schaltungsanordnung für den elektrischen Direktantrieb einer rotierenden Trennvorrichtung zum formatgerechten Zerteilen einer Materialbahn, insbesondere einer fliegenden Schere oder eines Gleichlaufquerschneiders, bei der ein Lageregler, ein Drehzahlregler, ein Beschleunigungsregler, ein unterlagerter Stromregler und eine Recheneinrichtung zur Ermittlung der Führungsgröße für den Lageregler vorgesehen sind.

Aus der US-A-35 81 613 ist eine Schaltungsanordnung für den elektrischen Direktantrieb einer fliegenden Schere zum formatgerechten Zerteilen einer Materialbahn bekannt, bei der eine Recheneinrichtung aus Meßwerten für den zurückgelegten Bahnweg und aus vorgegebenen Einstellwerten die Führungsgröße für einen Winkelregler ermittelt. Das Ausgangssignal des Winkelreglers wird einer nicht näher bezeichneten Antriebssteuerung zugeführt.

Eine geeignete Antriebssteuerung ist bekannt aus dem Aufsatz »Zeitoptimale Scherenregelung« (Archiv für Elektrotechnik 58 (1976), Seite 61 bis 67). Bei der dort beschriebenen zeitoptimalen Scherenregelung mit gleichförmig bewegtem Zielpunkt ist ein nichtlinearer Lageregler vorgesehen, dessen Verstärkung in Abhängigkeit von einer Bremskurve verändert wird. Dies bringt eine unerwünschte Unsicherheit bei der Dimensionierung der Regelung mit sich. Ferner wirken sich bei dieser bekannten Scherenregelung die Ungenauigkeiten und das Zeitverhalten der als Kaskade hintereinander geschalteten Regler störend aus, da bei rotierenden Trennvorrichtungen äußerst schnelle Antriebsregelungen erforderlich sind.

Aus Oppelt »Kleines Handbuch der Regelungstechnik«, 5. Auflage, Seite 514, 515 ist eine elektrische Lageregelung mit unterlagertem Geschwindigkeits- und Ankerstromregelkreis bekannt, bei der eine gemeinsame Führungsgröße über Führungsgrößenformer auf die nach Art einer Kaskadenregelung geschalteten Regler aufgeschaltet wird, um für die am jeweiligen Regler wirksame Führungsgröße einen vorgeschriebenen zeitlichen Verlauf zu erreichen.

Ferner ist aus der DE-B-13 02 871 eine Regeleinrichtung mit einem Rechner und mehreren Reglern zur Führung einer Produktionsanlage bekannt. Die einzelnen Regelkreise sind voneinander unabhängig. Der Rechner ermittelt jeweils einen Ergänzungswert zu einem vorgegebenen Sollwert, so daß auch bei Ausfall des Rechners noch eine ausreichende Regelung gewährleistet ist.

Der Erfindung liegt die Aufgabe zugrunde, eine Schaltungsanordnung der eingangs genannten Art für eine zeitoptimal und wegoptimal verlaufende Bewegung einer rotierenden Trennvorrichtung zu schaffen.

Erfindungsgemäß wird diese Aufgabe durch folgende Merkmale gelöst:

a)  die Recheneinrichtung ermittelt aus Meßwerten für den zurückgelegten Bahnweg sowie aus vorgegebenen Einstellwerten für das Format und die mechanischen Maschinendaten die Führungsgrößen für den Lageregler, den Drehzahlregler und den Beschleunigungsregler auf Grund von Funktionsverläufen, die aus der Bewegungsgleichung

$$s = \frac{v_0}{w} \cdot x + \frac{m \cdot r}{2J} \cdot \frac{1}{w^2} \cdot x^2$$

bzw.

$$s = x + \frac{m \cdot r}{2J} \cdot \frac{1}{w^2} \cdot x^2$$

der Trennvorrichtung gewonnen sind, wobei

s   den Weg der Schnittkante des Schneidewerkzeugs,
$v_0$   die Anfangsgeschwindigkeit des Schneidewerkzeugs,
t   die Zeit,
r   den Radius des von der Schnittkante des rotierenden Schneidewerkzeugs beschriebenen Zylinders,
J   das Trägheitsmoment,
m   das abgegebene Antriebsmoment,
x   den Bahnweg,
w   die Bahngeschwindigkeit

bezeichnen.

b)  dem Drehzahlregler wird die von der Recheneinrichtung ermittelte Führungsgröße und das Ausgangssignal des Lagereglers als Korrekturgröße zugeführt,
c)  dem Beschleunigungsregler wird die von der Recheneinrichtung ermittelte Führungsgröße und das Ausgangssignal des Drehzahlreglers als Korrekturgröße zugeführt.

Die erfindungsgemäße Schaltungsanordnung arbeitet außerordentlich schnell, da die Führungsgrößen für die unterlagerten Regler in der Kaskade unmittelbar von der Recheneinrichtung vorgegeben werden und somit von Ungenauigkeiten und vom Zeitverhalten der überlagerten Regler unabhängig sind. Jedoch werden auch die an der Trennvorrichtung erfaßten Größen berücksichtigt und dienen zur Korrektur von etwaigen Fehlern der Recheneinrichtung bei der Ermittlung der Führungsgrößen. Die erfindungsgemäße Anordnung arbeitet zeitoptimal, weil bei Bedarf das volle Beschleunigungsvermögen des Antriebs ausgenützt werden kann. Ebenso kann aber auch abhängig von den Maschinendaten und der Produktionsgeschwindigkeit die für die Beschleunigungsvorgänge und die Bremsvorgänge der Trennvorrichtung erforderliche Energie auf das für die Schnittfolge erforderliche Maß begrenzt werden. Die erfindungsgemäße Anordnung arbeitet auch wegoptimal, weil aus dem Bahnweg die Führungsgröße für den von der Trennvorrichtung zurückgelegten Weg über die Recheneinrichtung ermittelt wird und jede Abweichung vom optimalen Weg des Schneidewerkzeugs zu einer Korrektur über den Drehzahlregler führt. Die Recheneinrichtung kann außerdem die Bahngeschwindigkeit und den Hochlaufvorgang in Abhängigkeit von Formatfehlern begrenzen.

Ein Ausführungsbeispiel der Erfindung ist in der Zeichnung dargestellt und wird im folgenden näher beschrieben. Es zeigt

Fig. 1 eine erfindungsgemäße Schaltungsanordnung,

Fig. 2 eine Darstellung des Verlaufs der Regelgrößen bei Synchronformat,

Fig. 3 eine Darstellung des Verlaufs der Regelgrößen bei untersynchronem Format,

Fig. 4 eine Darstellung des Verlaufs der Regelgrößen bei übersynchronem Format.

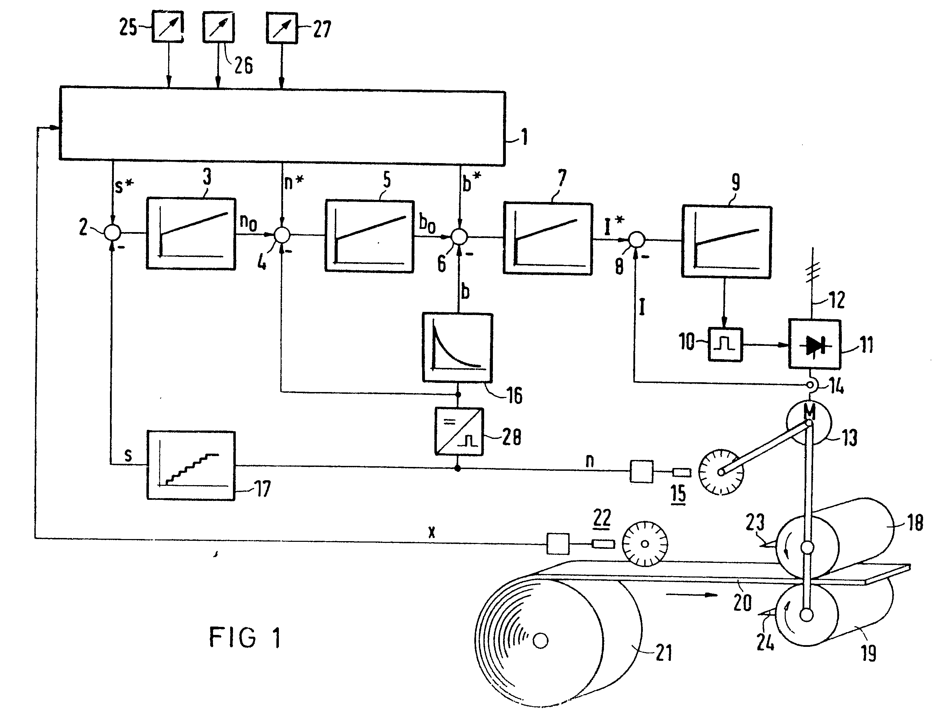

Fig. 1 zeigt das Strukturschaltbild einer erfindungsgemäßen Schaltungsanordnung für einen Gleichlaufquerschneider. Eine Materialbahn 20 wird von einer Abwickelrolle 21 abgezogen und durch ein Messerwalzenpaar 18, 19 mit Messern 23, 24 hindurchgeführt. Die Messerwalzen 18 und 19 werden von einer elektrischen Maschine 13 gegenläufig angetrieben. Die Messer 23 und 24 weisen vorzugsweise einen kleinen Anstellwinkel gegenüber der Querrichtung der Materialbahn 20 auf.

Der Direktantrieb für die Messerwalzen 18 und 19 umfaßt eine elektrische Maschine 13, die über einen Stromrichter 11 aus einem Drehstromnetz 12 gespeist wird. Als Stromrichter ist insbesondere eine Gegenparallelschaltung mit zwei vollgesteuerten Drehstrombrücken geeignet. Der Stromrichter 11 wird von einem Steuersatz 10 mit Zündimpulsen gesteuert, deren Zündwinkel von der Ausgangsspannung eines Stromreglers 9 bestimmt wird. Dem Stromregler 9 ist ein Vergleichsglied 8 vorgeschaltet, das aus dem Ausgangssignal I* eines Beschleunigungsreglers 7 als Führungsgröße und aus der von einem Strommeßwandler 14 erfaßten Regelgröße I des Stromregelkreises beaufschlagt wird. Das Vergleichsglied 8 bildet die Regeldifferenz für den Stromregler 9.

Weiterhin enthält die dargestellte Schaltungsanordnung einen dem Stromregler 9 vorgeschalteten Beschleunigungsregler 7, einen Drehzahlregler 5 und einen Lageregler 3, denen jeweils Vergleichsglieder vorgeschaltet sind. Zur Erfassung der Drehzahlen der Antriebsmaschine 13 ist beispielsweise ein nach dem Prinzip eines Winkelschrittgebers arbeitender digitaler Drehzahlgeber 15 vorgesehen, der aus einer mit der Welle der Antriebsmaschine 13 fest verbundenen Scheibe mit einer großen Anzahl von am Umfang gleichmäßig verteilten magnetisch, elektrisch oder optisch erkennbaren Elementen, einer diese Elemente abtastenden Sonde und einer Impulsformerstufe besteht. Die von digitalen Drehzahlgeber 15 erfaßte Drehzahl der Antriebsmaschine 13 wird in einem digitalen Integrator 17 aufsummiert, dessen Ausgangssignal ein Maß für den von den Messern 23 bzw. 24 der Messerwalzen 18 bzw. 19 bei jeder Umdrehung zurückgelegten Weg darstellt. Das Ausgangssignal s des Integrators 17 wird dem Vergleichsglied 2 im Eingang des Lagereglers 3 als Regelgröße für die Lageregelung zugeführt. Die Führungsgröße s* für den Lageregler 3 wird von einer Recheneinrichtung 1 ausgegeben. Die Recheneinrichtung 1 ermittelt außerdem die Führungsgröße n* für den Drehzahlregler 5 und die Führungsgröße b* für den Beschleunigungsregler 7. Die Führungsgröße n* für den Drehzahlregler 5 wird seinem Vergleichsglied 4 zusammen mit dem Ausgangssignal $n_0$ des Lagereglers 3 als Korrektursignal und der Regelgröße n des Drehzahlregelkreises zugeführt. Die Regelgröße n des Drehzahlregelkreises ist die vom digitalen Drehzahlgeber 15 erfaßte Drehzahl der Antriebsmaschine 13, die von einem Digital-Analog-Wandler 28 in eine analoge Spannung umgesetzt wird, sofern der Drehzahlregler 5 als analoger Regler ausgebildet ist.

Die Führungsgröße b* für den Beschleunigungsregler 7 wird seinem Vergleichsglied 6 zusammen mit dem Ausgangssignal $b_0$ des Drehzahlreglers 5 als Korrektursignal und der Regelgröße b des Beschleunigungsregelkreises zugeführt. Die Regelgröße b des Beschleunigungsregelkreises wird meßtechnisch als Differentialquotient der Drehzahl n der Antriebsmaschine 13 erfaßt. Die vom digitalen Drehzahlgeber 15 erfaßte Drehzahl wird nach ihrer Umsetzung im Digital-Analog-Wandler 28 über einen Differentialbildner 16 geführt, dessen Ausgangssignal b den Istwert der Beschleunigung der Antriebsmaschine 13 darstellt. Das Ausgangssignal I* des Beschleunigungsreglers 7 wird dem Vergleichsglied 8 als Führungsgröße für den Stromregelkreis zugeführt.

Die Recheneinrichtung 1 ermittelt die Führungsgröße s* für den Lageregler 3, die Führungsgröße n* für den Drehzahlregler 5 und die Führungsgröße b* für den Beschleunigungsregler 7 aus vorgegebenen Einstellwerten und aus Meßwerten für den Bahnweg. Zur Ermittlung des Bahnweges ist ein digitaler Weggeber 22 vorgesehen, der beispielsweise über ein Reibrad von der in Pfeilrichtung ablaufenden Materialbahn 20 angetrieben wird. Der digitale Weggeber 22 weist beispielsweise ebenfalls eine Scheibe mit einer großen Anzahl von am Umfang gleichmäßig verteilten magnetisch, elektrisch oder optisch erkennbaren Elementen auf, die von einer Sonde abgetastet werden, der eine Impulsformerstufe nachgeschaltet ist. An einer Einstellvorrichtung 25 wird ein Einstellwert für das Format vorgegeben, in das die Materialbahn 20 zerteilt werden soll. An einer weiteren Einstellvorrichtung 26 werden mechanische Maschinendaten vorgegeben, insbesondere die Bahngeschwindigkeit und das Trägheitsmoment der gesamten Anordnung. An einer weiteren Einstellvorrichtung 27 wird ein Begrenzungswert für die Führungsgröße b* für die Beschleunigung eingestellt, der vorzugsweise unterhalb des maximalen Beschleunigungsvermögens des Antriebs gewählt wird, damit der Beschleunigungsregler 7 nach beiden Richtungen eingreifen kann.

Die Erfindung geht davon aus, daß das Schneidewerkzeug der rotierenden Trennvorrichtung in Abhängigkeit vom Bahnweg der Materialbahn einen bestimmten Weg auf einem Zylinderumfang zurücklegen muß, damit die Materialbahn in Stücke mit vorgegebenem Format geschnitten wird. Die Recheneinrichtung ermittelt daher nach Maßgabe einer Bewegungsgleichung zu jedem Bahnpunkt die zugehörige Stellung des Schneidewerkzeugs, sowie die zur exakten Erreichung dieser Stellung erforderliche Drehzahl und Beschleunigung. Die rotatorische Bewegung der Trennvorrichtung wird durch Gleichung (1) beschrieben:

$$s = s_0 + v_0 \cdot t + \frac{m \cdot r}{2 J} \cdot t^2. \qquad (1)$$

Dabei bedeuten

s    Weg der Schnittkante des Schneidewerkzeugs,
$s_0$   Anfangswert des Weges der Schnittkante des Schneidewerkzeugs,
$v_0$   Anfangsgeschwindigkeit des Schneidewerkzeugs,
t    Zeit,
r    Radius des von der Schnittkante des rotierenden Schneidewerkzeugs beschriebenen Zylinders,
J    Trägheitsmoment,
m   abgegebenes Antriebsmoment.

Wird nur eine Beschleunigungsphase oder eine Bremsphase betrachtet, so kann für die weiteren Überlegungen der Nullpunkt so gelegt werden, daß in Gleichung (1) der Anfangswert $s_0$ des Weges der Schnittkante des Schneidewerkzeugs entfällt.

In der Gleichung (1) erscheint der Weg s der Schnittkante des Schneidewerkzeugs als Funktion der Zeit t. Die bei der erfindungsgemäßen Regelanordnung eingesetzte Recheneinrichtung soll jedoch den Messerweg s in Abhängigkeit vom gemessenen Bahnweg x berechnen. Zur Substitution der Zeit t wird daher die Gleichung (2) in die Gleichung (1) eingesetzt:

$$t = \frac{x}{w}. \qquad (2)$$

Hierin bedeuten

x    Bahnweg,
w   Bahngeschwindigkeit.

Die Substitution führt zur Gleichung (1a):

$$s = \frac{v_0}{w} \cdot x + \frac{m \cdot r}{2 J} \cdot \frac{1}{w^2} \cdot x^2. \qquad (1a)$$

Eine graphische Darstellung des Weges s der Schnittkante des Schneidewerkzeugs als Funktion des Bahnweges x zeigt einen unterschiedlichen Kurvenverlauf je nachdem, ob ein Synchronformat, ein untersynchrones Format oder ein übersynchrones Format geschnitten werden soll.

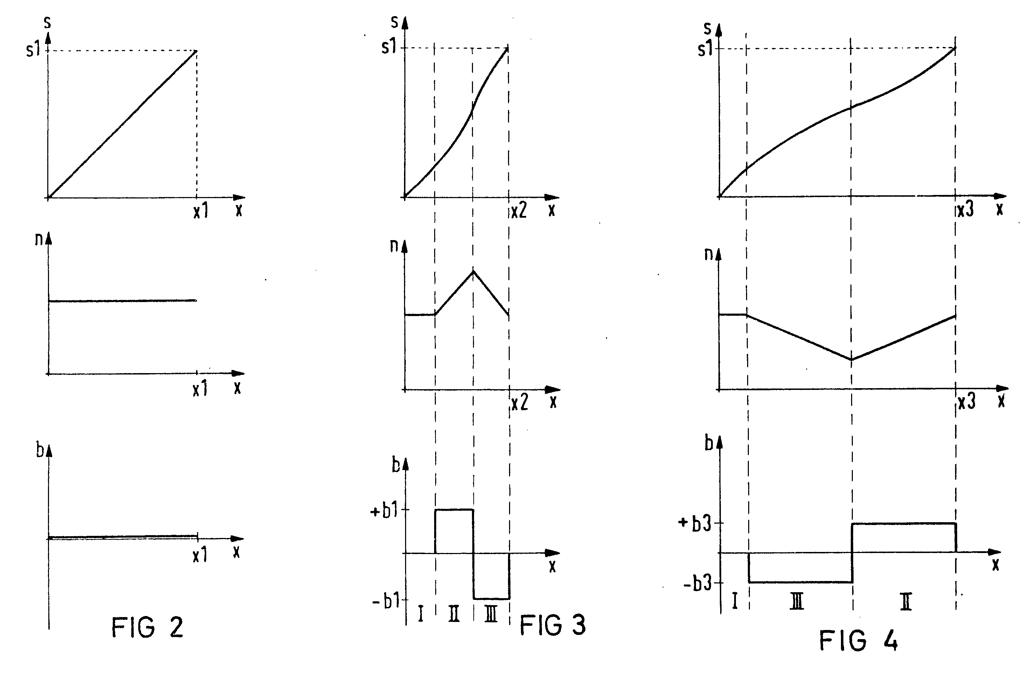

Figur 2 zeigt für ein Synchronformat den Weg s der Schnittkante des Schneidewerkzeugs, die Drehzahl n der Messerwalze und die Beschleunigung b der Trennvorrichtung jeweils in Abhängigkeit vom Bahnweg x. Synchronformat bedeutet, daß der von der rotierenden Schnittkante des Schneidewerkzeuges auf einem Zylinderumfang beschriebene Weg s1 dem zu schneidenden Format x1 entspricht. Die Wegfunktion ist eine Gerade mit einem Neigungswinkel von 45°. Der Messerzylinder rotiert mit gleichförmiger Drehzahl. Die Drehzahlfunktion ist eine waagerechte Gerade. Der Messerzylinder wird weder beschleunigt noch abgebremst. Die Beschleunigung ist Null.

Figur 3 zeigt bei untersynchronem Format den Weg s der Schnittkante des Schneidewerkzeuges, die Drehzahl n des Messerzylinders und die Beschleunigung b jeweils in Abhängigkeit vom Bahnweg x. Untersynchrones Format bedeutet, daß der dem Format entsprechende Bahnweg x2 kleiner ist als der von der rotierenden Schnittkante des Schneidewerkzeuges auf einem Zylinderumfang beschriebene Weg s1. Wenn ein untersynchrones Format geschnitten werden soll, so muß während des Schnitts die Geschwindigkeit der Schnittkante des Schneidewerkzeugs gleich der Bahngeschwindigkeit sein, um einen glatten Schnitt zu gewährleisten. Danach wird der Messerzylinder beschleunigt, damit das Schneidewerkzeug die Bahn überholt. Schließlich wird der Messerzylinder wieder auf die Bahngeschwindigkeit abgebremst. Die Wegfunktion zeigt in der Schnittphase I eine Gerade mit einem Steigungswinkel von 45°, in der Beschleunigungsphase II einen ansteigenden Parabelast einer Beschleunigungsparabel und in der Bremsphase III einen verflachenden Parabelast einer Bremsparabel. Die Drehzahlfunktion n zeigt in der Schnittphase I eine waagerechte Gerade, in der Beschleunigungsphase II eine ansteigende Gerade und in der Bremsphase III eine abfallende Gerade. Die Beschleunigungsfunktion b zeigt in der Schnittphase I den Beschleunigungswert Null, in der Beschleunigungsphase einen positiven Beschleunigungswert b2 und in der Bremsphase III einen gleich großen Verzögerungswert −b2.

Figur 4 zeigt für ein übersynchrones Format den Verlauf des Weges s der Schnittkante des Schneidewerkzeuges, der Drehzahl n des Messerzylinders und der Beschleunigung b in Abhängigkeit vom Bahnweg x. Übersynchrones Format bedeutet, daß der dem Format entsprechende Bahnweg x3 größer ist als der von der rotierenden Schnittkante des Schneidewerkzeuges auf einem Zylinderumfang zurückgelegte Weg s1. Wenn ein übersynchrones Format geschnitten werden soll, so muß während des Schnittes wiederum die Geschwindigkeit der Schnittkante des Schneidewerkzeuges mit der Bahngeschwindigkeit übereinstimmen, um einen glatten Schnitt zu gewährleisten. Danach wird der Messerzylinder abgebremst und anschließend wieder beschleunigt. Die Wegfunktion s zeigt in der Schnittphase I eine Gerade mit einem Neigungswinkel von 45°, in der anschließenden Bremsphase III einen verflachenden Parabelast einer Bremsparabel und in der Beschleunigungsphase II einen ansteigenden Parabelast einer Beschleunigungsparabel. Die Drehzahlfunktion n zeigt in der Schnittphase I eine waagerechte Gerade, in der Bremsphase III eine fallende Gerade und in der Beschleunigungsphase II eine ansteigende Gerade. Die Beschleunigungsfunktion b zeigt in der Schnittphase I den Beschleunigungswert Null, in der Bremsphase III einen negativen Beschleunigungswert $-b3$ und in der Beschleunigungsphase II einen positiven Beschleunigungswert b3.

Wie die Figuren 3 und 4 zeigen, gilt für den Übergang von der Schnittphase zur anschließenden Beschleunigungsphase bzw. Bremsphase, daß hier die Geschwindigkeit der Schnittkante des Schneidewerkzeuges mit der Bahngeschwindigkeit übereinstimmt. Zu Beginn der sich an die Schnittphase anschließenden Beschleunigungsphase bzw. Bremsphase ist die Anfangsgeschwindigkeit $v_0$ der Schnittkante des Schneidewerkzeuges gleich der Bahngeschwindigkeit w.

Die Figuren 3 und 4 zeigen weiterhin, daß der Parabelast der Bremsparabel gegenüber dem Parabelast der Beschleunigungsparabel lediglich um 180° gedreht ist, wobei gleiche absolute Beschleunigungswerte und Verzögerungswerte vorausgesetzt sind. Diese Voraussetzung ist bei elektrischen Direktantrieben ohne weiteres zu realisieren.

Unter diesen Gesichtspunkten kann die Gleichung (1a) zur Gleichung (1b) umgeschrieben werden:

$$s = x + \frac{m \cdot r}{2 J} \cdot \frac{1}{w^2} \cdot x^2 . \qquad (1b)$$

Die in den Figuren 2, 3, 4 dargestellten Funktionsverläufe sind die Grundlage der von der Recheneinrichtung 1 durchzuführenden Berechnungen zur Ermittlung der Führungsgröße s* für den Lageregler, der Führungsgröße n* für den Drehzahlregler und der Führungsgröße b* für den Beschleunigungsregler. Die Recheneinrichtung 1 kann die Ermittlung dieser Führungsgrößen beispielsweise unter Verwendung von Funktionsgebern vornehmen, welche die dargestellten Funktionen nachbilden. Bei untersynchronen Formaten und übersynchronen Formaten kann eine parabolische Interpolation vorgenommen werden, wie sie beispielsweise beschrieben ist in Siemens-Zeitschrift 44, 1970, Beiheft »Numerische Steuerungen«, Seite 58—62. Besonders vorteilhaft ist es jedoch, die entsprechenden Funktionsverläufe in Tabellenform in Festwertspeichern zu hinterlegen, beispielsweise in PROMs. Hierbei kann für jedes vom digitalen Weggeber 22 erfaßte Wegelement eine zugehörige Führungsgröße für den Lageregler, den Drehzahlregler und den Beschleunigungsregler gespeichert werden. Ebenso ist die Hinterlegung verschiedener Tabellen für verschiedene Produktionsprogramme mit unterschiedlichen Schneidewerkzeugen und unterschiedlichen Bahngeschwindigkeiten möglich.

Bei Verwendung einer entsprechend ausgebildeten Recheneinrichtung ist es auch möglich, daß die Recheneinrichtung die Funktion des digitalen Integrators 17, des Lagereglers 3 und des vorgeschalteten Vergleichsgliedes 2 übernimmt. An der grundsätzlichen Funktionsweise einer solchen Schaltungsanordnung mit einem in den Rechner einbezogenen Lageregler ändert sich hierdurch nichts.

Bei fliegenden Scheren gilt aus technologischen Gründen, daß während des Schnittes der von der Schere zurückgelegte Weg und damit auch die Drehzahl in reziproker Abhängigkeit von Cosinus des Schnittwinkels stehen soll (Siemens-Zeitschrift 43, 1969, Seite 690—694). Für diesen Anwendungsfall ist in den Figuren 2, 3, 4 anstelle der unter einem Winkel von 45° ansteigenden Geraden in der Schnittphase I eine Cosinus-Funktion vorzusehen. Sofern als Recheneinrichtung ein Interpolator verwendet wird, so können während des Schnittes die Führungsgrößen für den Lageregler und den Drehzahlregler über eine zirkulare Interpolation ermittelt werden. Bei Verwendung von Funktionsgebern müssen diese entsprechende Funktionen nachbilden. Die entsprechenden Funktionen können auch in Tabellenform in Festwertspeichern hinterlegt werden. Bei Verwendung einer speicherprogrammierten Recheneinrichtung ist man vom jeweiligen Anwendungsfall schaltungsmäßig unabhängig.

**Patentanspruch**

Schaltungsanordnung für den elektrischen Direktantrieb einer rotierenden Trennvorrichtung (18, 19, 23, 24) zum formatgerechten Zerteilen einer Materialbahn (20), insbesondere einer fliegenden Schere oder eines Gleichlaufquerschneiders, bei der ein Lageregler (3), ein Drehzahlregler (5), ein Beschleunigungsregler (7), ein unterlagerter Stromregler (9) und eine Recheneinrichtung (1) zur Ermittlung der Führungsgröße für den Lageregler (3) vorgesehen sind, gekennzeichnet durch folgende Merkmale:

a) die Recheneinrichtung (1) ermittelt aus Meßwerten für den zurückgelegten Bahnweg (x) sowie aus vorgegebenen Einstellwerten für das Format und die mechanischen Maschinendaten die Führungsgrößen für den Lageregler (3), den Drehzahlregler (5) und den Beschleunigungsregler (7) aufgrund von Funktionsverläufen, die aus der Bewegungsgleichung

$$s \; = \; \frac{v_0}{w} \cdot x + \frac{m \cdot r}{2\,J} \cdot \frac{1}{w^2} \cdot x^2 \qquad (1\,a)$$

bzw.

$$s \; = \; x + \frac{m \cdot r}{2\,J} \cdot \frac{1}{w^2} \cdot x^2 \qquad (1\,b)$$

der Trennvorrichtung gewonnen sind, wobei

s den Weg der Schnittkante des Schneidewerkzeugs,
$v_0$ die Anfangsgeschwindigkeit des Schneidewerkzeugs,
t die Zeit,
r den Radius des von der Schnittkante des rotierenden Schneidewerkzeugs beschriebenen Zylinders,
J das Trägheitsmoment,
m das abgegebene Antriebsmoment,
x den Bahnweg,
w die Bahngeschwindigkeit

bezeichnen.

b) dem Drehzahlregler (5) wird die von der Recheneinrichtung (1) ermittelte Führungsgröße (n*) und das Ausgangssignal des Lagereglers (3) als Korrekturgröße ($n_0$) zugeführt,
c) dem Beschleunigungsregler (7) wird die von der Recheneinrichtung (1) ermittelte Führungsgröße (b*) und das Ausgangssignal des Drehzahlreglers (5) als Korrekturgröße ($b_0$) zugeführt.

## Claim

A circuit arrangement for the electrical direct drive of a rotating cutting device (18, 19, 23, 24) for format-correct division of a strip of material (20), in particular flying shears or a synchronous crosscutter, wherein there are provided a position regulator (3), a rotational speed regulator (5), an acceleration regulator (7), a subsidiary current regulator (9) and a calculator (1) for determining the set value for the position regulator (3), characterised by the following features:

a) on the basis of measured values for the unused length of the strip (x) and on the basis of predetermined setting-up values for the format and for the mechanical machine data, the calculator (1) determines the set values for the position regulator (3), the rotation speed regulator (5) and the acceleration regulator (7) by means of function curves which are obtained from the movement equation

$$s \; = \; \frac{v_0}{w} \cdot x + \frac{m \cdot r}{2\,J} \cdot \frac{1}{w^2} \cdot x^2 \qquad (1\,a)$$

and

$$s \; = \; x + \frac{m \cdot r}{2\,J} \cdot \frac{1}{w^2} \cdot x^2 . \qquad (1\,b)$$

of the cutting device where

s the path of the cutting edge of the cutting tool
$v_0$ the starting speed of the cutting tool
t the time
r the radius of the cylinder described by the cutting edge of the rotating cutting tool,
J the moment of inertia
m the emitted driving torque
x the strip path
w the speed of the strip

b) the rotation speed regulator (5) is supplied with the set value (n*) determined by the calculator (1) and with the output signal of the position regulator (3) as a correction value ($n_0$),
c) the acceleration regulator (7) is supplied with the set value (b*) determined by the calculator (1) and with the output signal of the rotation speed regulator (5) as a correction value ($b_0$).

## Revendication

Montage pour l'entraînement électrique direct pour un dispositif de découpage rotatif (18, 19, 23, 24) pour découper au format voulu une bande de matériau (20), plus particulièrement pour une cisaille volante ou une découpeuse transversale synchrone, du type dans lequel il est prévu un régulateur de position (3), un régulateur de la vitesse de rotation (5), un régulateur de l'accélération (7), un régulateur de courant aval (9) et une calculatrice (1) pour déterminer les grandeurs de commande pour le régulateur de position (3), caractérisé par les moyens suivants:

a) la calculatrice (1) détermine, à partir des valeurs de mesure de la course effectuée (x) par la bande, à partir de valeurs de réglage prédéterminées pour le format et à partir des données mécaniques de la machine, les grandeurs de commande pour le régulateur de position (3), pour le régulateur de la vitesse de rotation (5) et pour le régulateur de l'accélération (7), sur la base d'allures de fonctions obtenues à partir des équations du mouvement

$$s = \frac{v_0}{w} \cdot x + \frac{m \cdot r}{2\,J} \cdot \frac{1}{w^2} \cdot x^2 \qquad (1\,a)$$

ou

$$s = x + \frac{m \cdot r}{2\,J} \cdot \frac{1}{w^2} \cdot x^2 \qquad (1\,b)$$

du dispositif de découpage, avec

s    la course de l'arête coupante de l'outil de découpage,

$v_0$    vitesse initiale de l'outil de découpage,

t    temps,

r    rayon du cylindre décrit par l'arête coupante de l'outil de découpage rotatif,

j    moment d'inertie,

m    couple d'entraînement fourni,

x    course de la bande,

w    vitesse de la bande;

b) on applique au régulateur de la vitesse de rotation (5) la grandeur de commande ($n^*$) déterminée par la calculatrice (1) et le signal de sortie du régulateur de position (3), en tant que grandeur de correction ($n_0$);

c) on applique au régulateur d'accélération (7) la grandeur de commande ($b^*$) déterminée par la calculatrice (1) et le signal de sortie du régulateur de la vitesse de rotation (5), en tant que grandeur de correction ($b_0$).

FIG 1

0 001 565

FIG 2

FIG 3

FIG 4